# FASCICULE DE BREVET EUROPEEN

(11) **EP 1 779 533 B1**
(45) Date de publication et mention de la délivrance du brevet: **20.04.2011**
(21) Numéro de dépôt: 05777143.8
(22) Date de dépôt: 14.06.2005
(51) Int. Cl.: H04B 1/16

(54) **MODULE D'ÉCHANGE D'INFORMATIONS PAR COURANTS PORTEURS ET PROCÉDÉ DE GESTION DU FONCTIONNEMENT DE CE MODULE**
MODUL FÜR DEN INFORMATIONSAUSTAUSCH MITTELS TRÄGERSTRÖMEN UND VERFAHREN ZUR BETRIEBSVERWALTUNG DIESES MODULS
MODULE FOR EXCHANGING INFORMATION BY CARRIER CURRENTS AND METHOD FOR MANAGING THE OPERATION OF SAID MODULE

(30) Priorité: 18.06.2004 FR 0406662
(43) Date de publication de la demande: 02.05.2007
(73) Titulaire: Valeo Etudes Electroniques, 94042 Créteil Cédex (FR)
(72) Inventeur: HUBERT, Vincent, F-95300 Pontoise (FR); BORIES Françis, F-95490 Vaureal (FR)
(74) Mandataire: de la Bigne, Guillaume Michel Marie
(86) Numéro de dépôt international: PCT/FR2005/001476
(87) Numéro de publication internationale: WO 2006/008363

(56) Documents cités:
- WO-A-94/18803
- WO-A-99/36802
- US-A- 5 089 974

## Description

La présente invention concerne un module d'échange d'informations par courants porteurs et un procédé de gestion du fonctionnement de ce module.

Elle s'applique en particulier au pilotage d'un organe électrique de véhicule automobile.

Un véhicule automobile comporte habituellement de nombreux organes électriques alimentés par une batterie.

Il est connu de piloter ces organes à l'aide de modules d'échange d'informations par courants porteurs.

Ainsi, on connaît déjà dans l'état de la technique, notamment de la publication WO94/18803 un module d'échange d'informations par courants porteurs, destiné au pilotage d'un organe électrique, du type comprenant des premiers moyens de réception d'un signal vecteur d'informations.

Un module de ce type utilisé dans un véhicule automobile superpose au signal de tension continue fourni par la batterie des signaux haute fréquence véhiculant des informations. Les signaux haute fréquence vecteurs d'informations circulent donc dans un circuit électrique (encore appelé ligne électrique) d'alimentation des organes électriques.

On notera qu'en général les premiers moyens de réception comprennent des moyens sensibles à des signaux de bande de fréquences relativement étroite consommant une quantité d'énergie relativement importante.

Or, on souhaite pouvoir limiter autant que possible la consommation d'énergie d'un module d'échange d'informations du type précité, notamment en réduisant autant que possible cette consommation lorsque le module n'est pas opérationnel.

L'invention a pour but de proposer un module du type précité dont la consommation en énergie soit relativement limitée lorsque le module n'est pas opérationnel.

A cet effet l'invention a pour objet un module d'échange d'informations par courants porteurs, conforme à la revendication 1.

Les seconds moyens n'étant dédiés essentiellement qu'au réveil des premiers moyens de réception, ils peuvent être relativement simples et moins consommateur d'énergie que les premiers moyens de réception. Ainsi, lorsque le module n'est pas opérationnel, les premiers moyens de réception peuvent être désactivés, la consommation du module étant limitée à celle des seconds moyens de réception.

Un module selon l'invention peut en outre comporter l'une ou plusieurs des caractéristiques suivantes :
- les premiers moyens de réception sont sensibles à des signaux de fréquences comprises dans une première bande de fréquences, et les seconds moyens de réception sont sensibles à des signaux de fréquences comprises dans une seconde bande de fréquences plus large que la première bande de fréquences ;
- les premiers moyens de réception sont sensibles à des signaux de fréquences comprises dans une première bande de fréquences, et les seconds moyens de réception sont sensibles à des signaux de fréquences comprises dans une seconde bande de fréquences disjointe de la première bande de fréquences.
- les premiers moyens de réception comprennent des moyens formant filtre passe bande étroite et les seconds moyens de réception comprennent des moyens formant filtre passe bande large agencés fonctionnellement en amont des moyens formant filtre passe bande étroite en considérant le sens de propagation d'un signal reçu par le module ;
- le module comprend des moyens d'inhibition des signaux reçus par les seconds moyens de réception comprenant, par exemple, des moyens formant filtre ou des moyens de temporisation ;
- les courants porteurs circulent dans un circuit électrique reliant une batterie d'alimentation électrique à un organe électrique de véhicule automobile.

L'invention a également pour objet un procédé de gestion du fonctionnement d'un module tel que défini ci-dessus, caractérisé en ce que l'on met sélectivement le module dans un état de veille et un état opérationnel en désactivant et activant respectivement les premiers moyens de réception, les seconds moyens de réception étant actifs dans ces deux états de veille et opérationnel.

Un procédé selon l'invention peut en outre comporter l'une ou plusieurs des caractéristiques suivantes :
- les premiers moyens de réception étant destinés à recevoir des signaux de gestion et le module étant initialement dans un état opérationnel, on met ce module en état de veille après un arrêt de réception de signaux de gestion ;
- on met le module en état de veille après un temps de temporisation prédéterminé qui suit la réception d'un signal de gestion requérant une mise en veille du module;
- le temps de temporisation s'achève après un arrêt de réception de signaux de gestion ;
- les signaux de gestion sont formés à partir d'une onde porteuse modulée, l'arrêt de réception des signaux de gestion correspondant à l'arrêt de réception de l'onde porteuse ;
- le temps de temporisation débute après l'arrêt de réception des signaux de gestion ;
- à la réception par les premiers moyens de réception d'un signal de gestion requérant une mise en veille du module, on n'autorise le module à émettre que pour répondre à des signaux de gestion, l'arrêt de réception des signaux de gestion intervient après que le module a acquitté la bonne réception du signal de mise requérant en veille, en réponse à un signal de gestion requérant l'acquittement ;
- le temps de temporisation débute avant l'arrêt de réception des signaux de gestion ;
- le module étant initialement dans un état de veille, à la réception par les seconds moyens de réception d'un signal de réveil, on active les premiers moyens de réception pour mettre le module dans un état opérationnel, on observe, pendant un temps d'observation prédéterminé, si le signal reçu par le module est cohérent, on remet le module dans un état de veille si, après ce temps d'observation, on conclu que le signal reçu par le module n'est pas cohérent ;
- lorsque le module est dans un état de veille, on inhibe les signaux reçus par les seconds moyens de réception pendant un temps d'inhibition prédéterminé ;
- le module étant initialement dans un état de veille, à la réception par les seconds moyens de réception d'un signal de réveil dont la durée est supérieure au temps d'inhibition, on active les premiers moyens de réception pour mettre le module dans un état opérationnel.

L'invention a encore pour objet un procédé de gestion du fonctionnement d'au moins deux modules chacun tel que défini ci-dessus, le fonctionnement de chaque module étant géré par un procédé tel que défini ci-dessus, caractérisé en ce que les temps d'inhibition des modules sont différents.

L'invention sera mieux comprise à la lecture de la description qui va suivre, donnée uniquement à titre d'exemple et faite en se référant aux dessins dans lesquels :
- la figure 1 est une vue schématique d'un réseau de modules d'échange d'informations comprenant au moins un module selon un premier mode de réalisation de l'invention ;
- la figure 2 est une vue schématique partielle du réseau montrant un module selon un second mode de réalisation de l'invention.

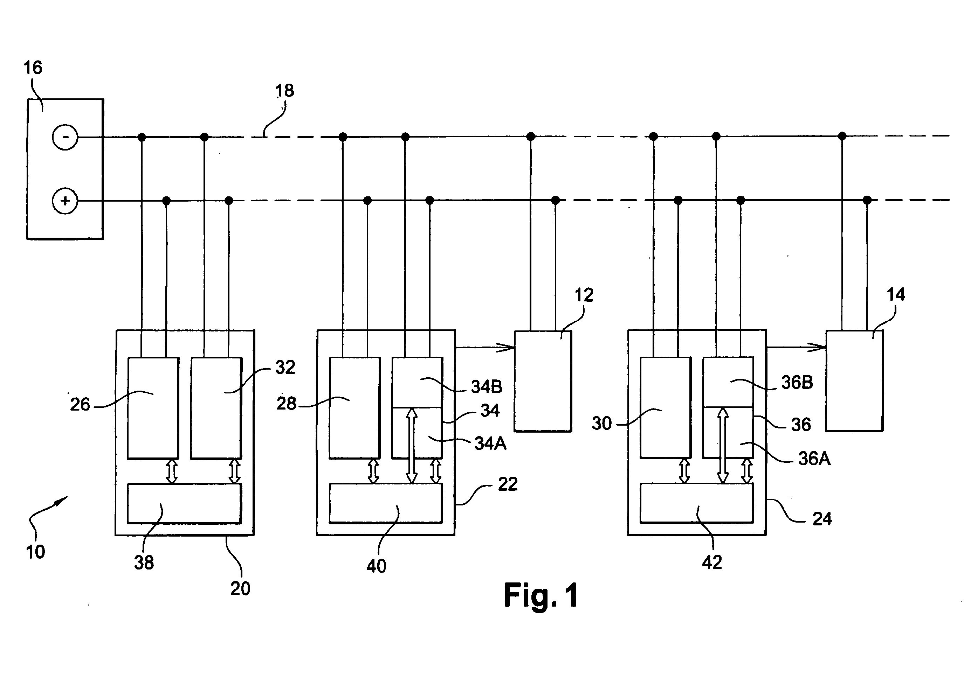

On a représenté sur la figure 1 un réseau 10 comportant au moins un module d'échange d'informations par courants porteurs selon un premier mode de réalisation de l'invention.

Dans l'exemple illustré, les modules sont destinés à piloter des organes électriques 12, 14 d'un véhicule automobile, alimentés par une batterie 16.

Dans le réseau 10, les modules sont couplés, de façon connue en soi, à un circuit électrique 18 reliant les organes 12, 14 à la batterie 16 pour permettre un échange d'informations entre les modules à l'aide de courants porteurs circulant dans le circuit 18.

Sur la figure 1, on a représenté un module maître 20 susceptible d'échanger des informations avec au moins deux modules esclaves 22, 24 selon un premier mode de réalisation de l'invention. Ces modules esclaves 22, 24 sont dédiés respectivement au pilotage des organes 12, 14.

Les modules 20 à 24 comprennent chacun des moyens d'émission 26, 28, 30, des moyens de réception 32, 34, 36 et un micro-contrôleur 38, 40, 42 de gestion des informations échangées.

Les moyens d'émission et de réception de chaque module sont reliés à leur micro-contrôleur respectif de façon connue en soi.

Les moyens de réception 34, 36 de chaque module esclave 22, 24 comprennent deux étages 34A, 34B, respectivement 36A, 36B. Chaque premier étage 34A, 36A forme des premiers moyens de réception de signaux vecteurs d'informations. Chaque premier étage 34A, 36A est agencé fonctionnellement en aval d'un second étage 34B, 36B formant de seconds moyens de réception de signaux vecteurs d'informations.

Chaque second étage 34B, 36B des moyens de réception d'un module esclave 22, 24 est relié à son micro-contrôleur 40, 42 respectif.

Chaque premier étage 34A, 36A est susceptible de prendre deux états, respectivement activé et désactivé.

Le module maître 20 est susceptible de mettre chaque module esclave 22, 24 sélectivement dans un état de veille et un état opérationnel, en émettant à l'attention de ce module esclave 22, 24 des signaux de gestion de son fonctionnement.

Lorsqu'un module esclave 22, 24 est dans un état de veille, le premier étage 34A, 36A de ses moyens de réception est désactivé.

Lorsque qu'un module esclave 22, 24 est dans un état opérationnel, le premier étage 34A, 36A est activé.

Le second étage 34B, 36B des moyens de réception d'un module esclave 22, 24 est actif dans les deux états de veille et opérationnel de ce module.

Pour faire passer le module esclave de son état de veille à son état opérationnel, le second étage 34B, 36B des moyens de réception d'un module esclave 22, 24 est destiné à activer le premier étage 34A, 36B de ces moyens de réception 34, 36, les faisant passer de leur état désactivé à leur état activé.

De préférence, le premier étage 34A, 36A des moyens de réception d'un module esclave 22, 24 est sensible à des signaux de fréquences comprises dans une première bande de fréquences, et le second étage 34B, 36B de ces moyens de réception est sensible à des signaux de fréquences comprises dans une seconde bande de fréquences plus large que la première bande de fréquences. Par exemple, la première bande de fréquences s'étend de 1.9 MHz à 2.1 MHz, tandis que la seconde bande de fréquences s'étend de 1 MHz à 3 MHz. On notera que les première et seconde bandes de fréquences sont centrées sur la même fréquence 2 MHz et que la seconde bande de fréquences comprend la première bande de fréquences.

En variante, la seconde bande de fréquences est disjointe de la première bande de fréquences. Par exemple, la première bande de fréquences s'étend de 1.9 MHz à 2.1 MHz, tandis que la seconde bande de fréquences s'étend de 100 KHz à 120 KHz. On notera que les fréquences de la seconde bande de fréquences sont inférieures aux fréquences de la première bande de fréquences et que la seconde bande de fréquences est plus étroite que la première bande de fréquences.

Dans l'exemple illustré, le premier étage 34A, 36A des moyens de réception 34, 36 d'un module esclave 22, 24 comprend des moyens passe-bande étroite et le second étage 34B, 36B de ces moyens de réception comprend des moyens formant filtre passe-bande large agencés fonctionnellement en amont des moyens formant filtre passe-bande étroite.

On décrira ci-dessous un procédé pour la gestion du fonctionnement des modules esclaves 22, 24 permettant de mettre chaque module esclave sélectivement dans un état de veille et un état opérationnel, ceci en désactivant et en activant le premier étage 34A, 36A des moyens de réception 34, 36 de chaque module esclave 22, 24.

### 1) Mise en état de veille des modules esclaves.

Les premiers moyens de réception sont notamment destinés à recevoir des signaux de gestion.

Les modules esclaves 22, 24 étant initialement dans un état opérationnel, les moyens 26 du module maître 20 émettent, sur le circuit 18, un signal de gestion requérant une mise en veille des modules esclaves 22, 24.

A la suite de la réception du signal de mise en veille par le premier étage 34A, 36A d'un module esclave 22, 24, ce dernier n'est autorisé à émettre que pour répondre à des signaux de gestion provenant du module maître 20.

Puis, le module maître 20 émet vers les modules esclaves 22, 2' n signal de gestion requérant l'acquittement par chaque module 22, 24 de la bonne réception du signal de mise en veille.

Les modules esclaves 22, 24 répondent chacun au module maître 20, à l'aide de leurs moyens d'émission 28, 30, en acquittant la bonne réception du signal de mise en veille.

Si l'un des modules esclaves 22, 24 n'acquitte pas la bonne réception du signal de mise en veille, le module maître 20 ré-émet un signal de gestion requérant une mise en veille des modules esclaves 22, 24 et les étapes ci-dessus sont à nouveau effectuées.

Lorsque le module maître 20 a reçu les acquittements de tous les modules esclaves 22, 24, il cesse d'émettre des signaux de gestion sur le circuit 18.

On met les modules esclaves 22, 24 en état de veille après un temps de temporisation prédéterminé qui débute après l'arrêt de réception des signaux de gestion par chacun des modules 22, 24 (et donc qui s'achève après l'arrêt de réception des signaux de gestion par chacun des modules 22, 24).

Ainsi, chaque module esclave 22, 24 est mis en état de veille après l'arrêt de réception par ce dernier des signaux de gestion, par conséquent après que le module esclave 22, 24 a acquitté la bonne réception du signal de mise en veille.

On notera qu'en général les signaux de gestion sont formés par modulation d'une onde porteuse, l'arrêt de l'émission par le module maître de signaux de gestion étant décelé dans ce cas par les modules esclaves 22, 24 par l'arrêt de circulation de l'onde porteuse, modulée ou non, sur le circuit 18.

On notera également que, du fait que les modules esclaves 22, 24 ne sont mis en veille qu'après l'arrêt de réception par ces modules 22, 24 des signaux de gestion, on évite le risque qu'un module esclave 22, 24 venant de se mettre en état de veille ne retourne intempestivement à un état opérationnel par mauvaise interprétation d'un signal de gestion concernant un autre module esclave 22, 24.

Selon une variante du procédé ci-dessus, les modules esclaves 22, 24 étant initialement dans un état opérationnel, le module maître 20 émet dans ce cas une série de signaux de gestion identiques (au moins deux) requérant chacun une mise en veille des modules esclaves 22, 24. Cette série de signaux de gestion identiques correspond donc à une instruction de mise en veille des modules esclaves 22, 24 qui est répétée un certain nombre de fois.

Comme précédemment, on met chaque module esclave 22, 24 en état de veille après le temps de temporisation qui suit la réception du signal de gestion requérant la mise en veille des modules esclaves 22, 24. Toutefois, dans ce cas, le temps de temporisation débute avant l'arrêt de réception des signaux de gestion. Par exemple, le temps de temporisation débute à la réception du premier signal de la série correctement reçu par le premier étage de réception 34A, 36A.

Selon cette variante, il n'y pas lieu de gérer des acquittements pour vérifier que chaque module esclave 22, 24 a bien reçu un signal de mise en veille. En effet, la répétition du signal de mise en veille des modules esclaves 22, 24 garantit a priori la bonne réception de cette instruction par chacun des modules esclaves.

De plus, le temps de temporisation est préférentiellement choisi de telle manière qu'il soit plus long que la durée d'émission de la série de signaux de gestion. Ainsi, on évite le risque qu'un module esclave 22, 24 venant de se mettre en état de veille ne retourne intempestivement à un état opérationnel par réception et mauvaise interprétation d'un second signal de gestion de la série.

### 2) Mise en état opérationnel des modules esclaves.

Les modules esclaves 22, 24 étant initialement dans un état de veille, les moyens 26 du module maître 20 émettent, sur le circuit 18, un signal de gestion (signal de réveil) requérant une mise en état opérationnel des modules esclaves 22, 24.

La forme du signal de réveil peut être relativement rudimentaire, dans la mesure où elle reste adaptée à la structure du second étage de réception 34B, 36B des modules esclaves 22, 24.

A la réception du signal de réveil par le second étage de réception 34B, 36B d'un module esclave 22, 24, on active le premier étage de réception 34A, 36A, de préférence par l'intermédiaire d'une information adressée par le second étage de réception 34B, 36B au microcontrôleur 40, 42 lequel est susceptible de communiquer avec les premier 34A, 36A et second 34B, 36B étages de réception.

Le module esclave 22, 24 ayant reçu le signal de mise en état opérationnel est alors dans un état opérationnel.

Puis, on observe, pendant un temps d'observation prédéterminé, si le signal reçu par le module esclave 22, 24 est cohérent.

Si, après ce temps d'observation, on conclu que le signal reçu n'est pas cohérent, on remet automatiquement le module esclave 22, 24 dans un état de veille, sans que le module maître soit obligé de donner d'instruction à cet effet.

Cette remise automatique du module esclave 22, 24 dans un état de veille permet de pallier une mise en état opérationnel intempestive de ce module esclave 22, 24 résultant par exemple de la réception d'un signal parasite (par exemple un bruit sur le circuit 18) par le second étage de réception 34B, 36B du module 22, 24.

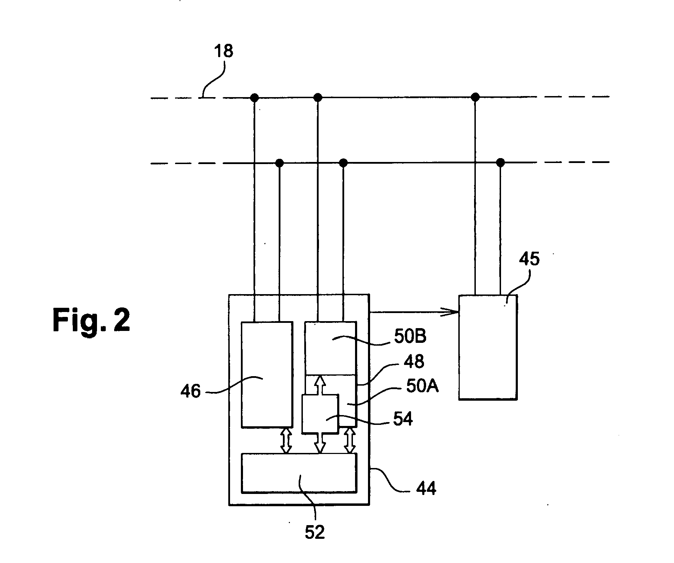

Sur la figure 2, on a représenté un module esclave 44 selon un second mode de réalisation de l'invention.

De façon analogue aux modules esclaves selon le premier mode de réalisation, le module esclave 44 est destiné à échanger des informations avec le module maître 20 par courants porteurs circulant dans le circuit électrique 18, afin de piloter un organe électrique 45 du véhicule automobile.

Le module esclave 44 comprend, de façon analogue au premier mode de réalisation, des moyens d'émission 46, des moyens de réception 48, comportant deux étages 50A, 508, et un micro-contrôleur 52.

Toutefois, dans ce second mode de réalisation, le module esclave 44 comporte des moyens 54 d'inhibition des signaux reçus par le second étage de réception 508. Ces moyens d'inhibition 54 comprennent par exemple des moyens classiques formant filtre ou des moyens classiques de temporisation.

La mise en état de veille ou opérationnel du module 44 se fait de façon analogue que pour les modules esclaves 22, 24 décrits précédemment.

Toutefois, dans ce second mode de réalisation de l'invention, lorsque le module esclave 44 est en état de veille, on inhibe, par l'intermédiaire des moyens d'inhibition 54, les signaux reçus par le second étage de réception 50B, ceci pendant un temps d'inhibition prédéterminé.

Pour mettre le module esclave 44 dans un état opérationnel, le module maître 20 émet sur le circuit électrique 18 un signal de réveil dont la durée est supérieure au temps d'inhibition.

A la suite de la réception de ce signal de réveil par le second étage de réception 50B du module esclave 44, on active le premier étage de réception 50A de préférence par l'intermédiaire d'une information adressée par le second étage de réception 50B au microcontrôleur 52 lequel est susceptible de communiquer avec les premier 50A et second 50B étages de réception.

L'inhibition des signaux reçus par le second étage de réception 50B permet d'éviter a priori une mise en état opérationnel intempestive du module esclave 44 résultant par exemple de la réception d'un signal parasite par le second étage de réception 50B du module 44.

L'inhibition des signaux reçus par le second étage de réception 50B permet par ailleurs une gestion différenciée du fonctionnement d'au moins deux modules esclaves (du même type que le module esclave 44) en leur affectant des temps d'inhibition différents.

Ainsi, selon la durée du signal de réveil émis, on peut limiter la mise en état opérationnel à un sous-ensemble de modules esclaves du réseau ou au contraire l'imposer à l'ensemble des modules esclaves du réseau.

On notera que l'invention ne se limite pas aux modes de réalisation décrits.

En particulier, d'autres parties du module esclave 22, 24, 44, comme les moyens d'émission 26, 28, 46 et/ou le microcontrôleur 38, 40, 52, peuvent être désactivés dans l'état de veille et activés dans l'état opérationnel.

De plus, le module maître 20 peut lui aussi comporter des premier et second moyens de réception, d'une manière analogue aux modules esclave 22, 24. Il peut ainsi être mis en état de veille et en état opérationnel de la même manière que les modules esclaves 22, 24.

Enfin, les nombre de modules esclaves peut être quelconque, notamment supérieur à deux.

## Revendications

1. Module (22, 24 ; 44) d'échange d'informations par courants porteurs, destiné au pilotage d'un organe électrique (12, 14 ; 45), du type comprenant des premiers moyens de réception (34A, 36A ; 50A) d'un signal vecteur d'informations, **caractérisé en ce que** les premiers moyens de réception (34A, 36A ; 50A) peuvent prendre deux états, respectivement activé et désactivé, et **en ce que** le module comprend en outre des seconds moyens de réception (34B, 36B ; 50B) d'un signal de réveil destinés à activer les premiers moyens de réception (34A, 36A ; 50A) pour les faire passer de leur état désactivé à leur état activé.

2. Module (22, 24 ; 44) selon la revendication 1, dans lequel les premiers moyens de réception (34A, 36A ; 50A) sont sensibles à des signaux de fréquences comprises dans une première bande de fréquences, et les seconds moyens de réception (34B, 368 ; 50B) sont sensibles à des signaux de fréquences comprises dans une seconde bande de fréquences plus large que la première bande de fréquences.

3. Module (22, 24 ; 44) selon la revendication 1 ou 2, dans lequel les premiers moyens de réception (34A, 36A ; 50A) sont sensibles à des signaux de fréquences comprises dans une première bande de fréquences, et les seconds moyens de réception (348, 36B ; 50B) sont sensibles à des signaux de fréquences comprises dans une seconde bande de fréquences disjointe de la première bande de fréquences.

4. Module (22, 24 ; 44) selon l'une quelconque des revendications 1 à 3, dans lequel les premiers moyens de réception (34A, 36A ; 50A) comprennent des moyens formant filtre passe bande étroite et les seconds moyens de réception (34B, 36B ; 50B) comprennent des moyens formant filtre passe bande large agencés fonctionnellement en amont des moyens formant filtre passe bande étroite en considérant le sens de propagation d'un signal reçu par le module.

5. Module (44) selon l'une quelconque des revendications 1 à 4, comprenant des moyens d'inhibition (54) des signaux reçus par les seconds moyens de réception (34B, 36B ; 50B) comprenant, par exemple, des moyens formant filtre ou des moyens de temporisation.

6. Module (22, 24 ; 44) selon l'une quelconque des revendications 1 à 5, dans lequel les courants porteurs circulent dans un circuit électrique (18) reliant une batterie d'alimentation électrique (16) à un organe (12, 44 ; 45) électrique de véhicule automobile.

7. Procédé de gestion du fonctionnement d'un module (22, 24 ; 44) selon l'une quelconque des revendications 1 à 6, **caractérisé en ce que** l'on met sélectivement le module (22, 24 ; 44) dans un état de veille et un état opérationnel en désactivant et activant respectivement les premiers moyens de réception (34A, 36A ; 50A), les seconds moyens de réception (34B, 36B ; 50B) étant actifs dans ces deux états de veille et opérationnel.

8. Procédé selon la revendication 7, dans lequel, les premiers moyens de réception (34B, 36B ; 50B) étant destinés à recevoir des signaux de gestion et le module (22, 24 ; 44) étant initialement dans un état opérationnel, on met ce module (22, 24 ; 44) en état de veille après un temps de temporisation prédéterminé qui suit la réception d'un signal de gestion requérant une mise en veille du module (22, 24 ; 44).

9. Procédé selon la revendication 8, dans lequel le temps de temporisation s'achève après un arrêt de réception de signaux de gestion.

10. Procédé selon la revendication 9, dans lequel les signaux de gestion sont formés à partir d'une onde porteuse modulée, l'arrêt de réception des signaux de gestion correspondant à l'arrêt de réception de l'onde porteuse.

11. Procédé selon la revendication 9 ou 10, dans lequel le temps de temporisation débute après l'arrêt de réception des signaux de gestion.

12. Procédé selon l'une quelconque des revendications 9 à 11, dans lequel :
- à la réception du signal de gestion requérant une mise en veille du module (22, 24 ; 44), on n'autorise le module (22, 24 ; 44) à émettre que pour répondre à des signaux de gestion,
- l'arrêt de réception des signaux de gestion intervient après que le module (22, 24 ; 44) a acquitté la bonne réception du signal de gestion requérant une mise en veille, en réponse à un signal de gestion requérant l'acquittement.

13. Procédé selon l'une quelconque des revendications 9 à 12, dans lequel le temps de temporisation débute avant l'arrêt de réception des signaux de gestion.

14. Procédé selon l'une quelconque des revendications 7 à 13, dans lequel:
- le module (22, 24 ; 44) étant initialement dans un état de veille, à la réception par les seconds moyens de réception (34B, 36B ; 50B) d'un signal de réveil, on active les premiers moyens de réception (34A, 36A ; 50A) pour mettre le module (22, 24 ; 44) dans un état opérationnel,
- on observe, pendant un temps d'observation prédéterminé, si le signal reçu par le module (22, 24 ; 44) est cohérent,
- on remet le module (22, 24 ; 44) dans un état de veille si, après ce temps d'observation, on conclu que le signal reçu par le module (22, 24 ; 44) n'est pas cohérent.

15. Procédé selon l'une quelconque des revendications 7 à 14 pour la gestion du fonctionnement d'un module (44) selon la revendication 5 ou 6, procédé dans lequel, lorsque le module (44) est dans un état de veille, on inhibe les signaux reçus par les seconds moyens de réception (50B) pendant un temps d'inhibition prédéterminé.

16. Procédé selon la revendication 15, dans lequel, le module (44) étant initialement dans un état de veille, à la réception par les seconds moyen de réception (50B) d'un signal de réveil dont la durée est supérieure au temps d'inhibition, on active les premiers moyens de réception (50A) pour mettre le module (44) dans un état opérationnel.

17. Procédé de gestion du fonctionnement d'au moins deux modules chacun selon la revendication 5, le fonctionnement de chaque module étant géré par un procédé selon la revendication 15 ou 16, **caractérisé en ce que** les temps d'inhibition des modules sont différents.

## Claims

1. Module (22, 24; 44) for exchanging information by carrier currents, intended for the control of an electrical facility (12, 14; 45), of the type comprising first means of reception (34A, 36A; 50A) of an information vector signal, **characterized in that** the first reception means (34A, 36A; 50A) can take two states, respectively activated and deactivated, and **in that** the module furthermore comprises second means of reception (34B, 36B; 50B) of a wakeup signal intended to activate the first reception means (34A, 36A; 50A) so as to toggle them from their deactivated state to their activated state.

2. Module (22, 24; 44) according to Claim 1, in which the first reception means (34A, 36A; 50A) are sensitive to signals of frequencies included in a first frequency band, and the second reception means (34B, 36B; 50B) are sensitive to signals of frequencies included in a second frequency band wider than the first frequency band.

3. Module (22, 24; 44) according to Claim 1 or 2, in which the first reception means (34A, 36A; 50A) are sensitive to signals of frequencies included in a first frequency band, and the second reception means (34B, 36B; 50B) are sensitive to signals of frequencies included in a second frequency band disjoint from the first frequency band.

4. Module (22, 24; 44) according to any one of Claims 1 to 3, in which the first reception means (34A, 36A; 50A) comprise means forming a narrow bandpass filter and the second reception means (34B, 36B; 50B) comprise means forming a wide bandpass filter which are arranged functionally upstream of the means forming a narrow bandpass filter when considering the direction of propagation of a signal received by the module.

5. Module (44) according to any one of Claims 1 to 4, comprising means (54) for disabling the signals received by the second reception means (34B, 36B; 50B) comprising, for example, means forming a filter or timeout means.

6. Module (22, 24; 44) according to any one of Claims 1 to 5, in which the carrier currents flow in an electrical circuit (18) linking an electrical power supply battery (16) to an electrical facility (12, 14; 45) of a motor vehicle.

7. Method for managing the operation of a module (22, 24; 44) according to any one of Claims 1 to 6, **characterized in that** the module (22, 24; 44) is placed selectively in a standby state and an operational state by deactivating and activating respectively the first reception means (34A, 36A; 50A), the second reception means (34B, 36B; 50B) being active in these two states, standby and operational.

8. Method according to Claim 7, in which, the first reception means (34B, 36B; 50B) being intended to receive management signals and the module (22, 24; 44) initially being in an operational state, this module (22, 24; 44) is placed in the standby state after a predetermined timeout time which follows the reception of a management signal requesting that the module (22, 24; 44) be placed on standby.

9. Method according to Claim 8, in which the timeout time is completed after a stopping of reception of management signals.

10. Method according to Claim 9, in which the management signals are formed on the basis of a modulated carrier wave, the stopping of reception of the management signals corresponding to the stopping of reception of the carrier wave.

11. Method according to Claim 9 or 10, in which the timeout time starts after the stopping of reception of the management signals.

12. Method according to any one of Claims 9 to 11, in which:
- upon reception of the management signal requesting that the module (22, 24; 44) be placed on standby, the module (22, 24; 44) is permitted to emit only so as to respond to management signals,
- the stopping of reception of the management signals occurs after the module (22, 24; 44) has acknowledged proper reception of the management signal requesting a placement on standby, in response to a management signal requesting the acknowledgement.

13. Method according to any one of Claims 9 to 12, in which the timeout time starts before the stopping of reception of the management signals.

14. Method according to any one of Claims 7 to 13, in which:
- the module (22, 24; 44) initially being in a standby state, upon reception by the second reception means (34B, 36B; 50B) of a wakeup signal, the first reception means (34A, 36A; 50A) are activated so as to place the module (22, 24; 44) in an operational state,
- the signal received by the module (22, 24; 44) is observed for a predetermined observation time to see if it is coherent,
- the module (22, 24; 44) is placed in a standby state again if, after this observation time, it is concluded that the signal received by the module (22, 24; 44) is not coherent.

15. Method according to any one of Claims 7 to 14 for the management of the operation of a module (44) according to Claim 5 or 6, in which method, when the module (44) is in a standby state, the signals received by the second reception means (50B) are disabled for a predetermined disabling time.

16. Method according to Claim 15, in which, the module (44) initially being in a standby state, upon reception by the second reception means (50B) of a wakeup signal whose duration is greater than the disabling time, the first reception means (50A) are activated so as to place the module (44) in an operational state.

17. Method for managing the operation of at least two modules each according to Claim 5, the operation of each module being managed by a method according to Claim 15 or 16, **characterized in that** the disabling times for the modules are different.

## Patentansprüche

1. Modul (22, 24; 44) für den Informationsaustausch über Trägerströme, das zum Steuern eines elektrischen Bauteils (12, 14; 45) bestimmt ist, von der Art, die erste Empfangseinrichtungen (34A, 36A; 50A) eines Informationsträgersignals enthält, **dadurch gekennzeichnet, dass** die ersten Empfangseinrichtungen (34A, 36A; 50A) zwei Zustände annehmen können, einen aktivierten bzw. einen deaktivierten, und dass das Modul außerdem zweite Empfangseinrichtungen (34B, 36B; 50B) eines Wecksignals enthält, das dazu bestimmt ist, die ersten Empfangseinrichtungen (34A, 36A, 50A) zu aktivieren, um sie von ihrem deaktivierten Zustand in ihren aktivierten Zustand übergehen zu lassen.

2. Modul (22, 24; 44) nach Anspruch 1, bei dem die ersten Empfangseinrichtungen (34A, 36A; 50A) auf in einem ersten Frequenzband enthaltene Frequenzsignale ansprechen, und die zweiten Empfangseinrichtungen (34B, 36B; 50B) auf in einem zweiten Frequenzband enthaltene Frequenzsignale ansprechen, das breiter als das erste Frequenzband ist.

3. Modul (22, 24; 44) nach Anspruch 1 oder 2, bei dem die ersten Empfangseinrichtungen (34A, 36A; 50A) auf in einem ersten Frequenzband enthaltene Frequenzsignale ansprechen, und die zweiten Empfangseinrichtungen (34B, 36B, 50B) auf in einem zweiten Frequenzband enthaltene Frequenzsignale ansprechen, das vom ersten Frequenzband betrennt ist.

4. Modul (22, 24; 44) nach einem der Ansprüche 1 bis 3, bei dem die ersten Empfangseinrichtungen (34A, 36A; 50A) ein schmales Bandpassfilter bildende Einrichtungen enthaltene, und die zweiten Empfangseinrichtungen (34B, 36B; 50B) ein breites Bandpassfilter bildende Einrichtungen enthalten, die funktional in der Ausbreitungsrichtung eines vom Modul empfangenen Signals vor den ein schmales Bandpassfilter bildenden Einrichtungen angeordnet sind.

5. Modul (44) nach einem der Ansprüche 1 bis 4, das Sperreinrichtungen (54) der von den zweiten Empfangseinrichtungen (34B, 36B; 50B) empfangenen Signale enthält, die zum Beispiel ein Filter bildende Einrichtungen oder Verzögerungseinrichtungen enthalten.

6. Modul (22, 24; 44) nach einem der Ansprüche 1 bis 5, bei dem die Trägerströme in einem elektrischen Schaltkreis (18) fließen, der eine Stromversorgungsbatterie (16) mit einem elektrischen Bauteil (12, 14; 45) eines Kraftfahrzeugs verbindet.

7. Verfahren zur Verwaltung des Betriebs eines Moduls (22, 24; 44) nach einem der Ansprüche 1 bis 6, **dadurch gekennzeichnet, dass** das Modul (22, 24; 44) selektiv in einen Standby-Zustand und in einen betriebsbereiten Zustand versetzt wird, indem die ersten Empfangseinrichtungen (34A, 36A; 50A) deaktiviert bzw. aktiviert werden, während die zweiten Empfangseinrichtungen (34B, 36B, 50B) in diesen zwei Standby- und betriebsbereiten Zuständen aktiv sind.

8. Verfahren nach Anspruch 7, bei dem, wenn die ersten Empfangseinrichtungen (34B, 36B; 50B) dazu bestimmt sind, Verwaltungssignale zu empfangen, und das Modul (22, 24; 44) anfangs in einem betriebsbereiten Zustand ist, dieses Modul (22, 24; 44) nach einer vorbestimmten Verzögerungszeit in den Standby-Zustand versetzt wird, die auf den Empfang eines Verwaltungssignals folgt, das ein Versetzen des Moduls (22, 24; 44) in den Standby-Zustand fordert.

9. Verfahren nach Anspruch 8, bei dem die Verzögerungszeit nach einem Beenden des Empfangs von Verwaltungssignalen endet.

10. Verfahren nach Anspruch 9, bei dem die Verwaltungssignale ausgehend von einer modulierten Trägerwelle geformt werden, wobei das Beenden des Empfangs der Verwaltungssignale dem Beenden des Empfangs der Trägerwelle entspricht.

11. Verfahren nach Anspruch 9 oder 10, bei dem die Verzögerungszeit nach dem Beenden des Empfangs der Verwaltungssignale beginnt.

12. Verfahren nach einem der Ansprüche 9 bis 11, bei dem:
- bei Empfang des Verwaltungssignals, das ein Versetzen des Moduls (22, 24; 44) in den Standby-Zustand fordert, das Modul (22, 24; 44) nur zum Antworten auf Verwaltungssignale sendeberechtigt wird,
- das Beenden des Empfangs der Verwaltungssignale erfolgt, nachdem das Modul (22, 24; 44) den einwandfreien Empfang des ein Versetzen in den Standby-Zustand fordernden Verwaltungssignals als Antwort auf ein die Bestätigung forderndes Verwaltungssignal bestätigt hat.

13. Verfahren nach einem der Ansprüche 9 bis 12, bei dem die Verzögerungszeit vor dem Beenden des Empfangs der Verwaltungssignale beginnt.

14. Verfahren nach einem der Ansprüche 7 bis 13, bei dem:
- wenn das Modul (22, 24; 44) anfangs in einem Standby-Zustand ist, bei Empfang eines Wecksignals durch die zweiten Empfangseinrichtungen (34B, 36B; 50B) die ersten Empfangseinrichtungen (34A, 36A; 50A) aktiviert werden, um das Modul (22, 24; 44) in einen betriebsbereiten Zustand zu versetzen,
- während einer vorbestimmten Verzögerungszeit beobachtet wird, ob das vom Modul (22, 24; 44) empfangene Signal kohärent ist,
- das Modul (22, 24; 44) wieder in einen Standby-Zustand versetzt wird, wenn nach dieser Verzögerungszeit gefolgert wird, dass das vom Modul (22, 24; 44) empfangene Signal nicht kohärent ist.

15. Verfahren nach einem der Ansprüche 7 bis 14 zur Verwaltung des Betriebs eines Moduls (44) nach Anspruch 5 oder 6, Verfahren, bei dem, wenn das Modul (44) in einem Standby-Zustand ist, die von den zweiten Empfangseinrichtungen (50B) empfangenen Signale während einer vorbestimmten Sperrzeit gesperrt werden.

16. Verfahren nach Anspruch 15, bei dem, wenn das Modul (44) anfangs in einem Standby-Zustand ist, bei Empfang eines Wecksignals durch die zweiten Empfangseinrichtungen (50B), dessen Dauer länger als die Sperrzeit ist, die ersten Empfangseinrichtungen (50A) aktiviert werden, um das Modul (44) in einen betriebsbereiten Zustand zu versetzen.

17. Verfahren zur Verwaltung des Betriebs von mindestens zwei Modulen, jedes nach Anspruch 5, wobei der Betrieb jedes Moduls von einem Verfahren nach Anspruch 15 oder 16 verwaltet wird, **dadurch gekennzeichnet, dass** die Sperrzeiten der Module unterschiedlich sind.
